# EUROPÄISCHE PATENTSCHRIFT

(11) **EP 3 114 362 B1**
(45) Veröffentlichungstag und Bekanntmachung des Hinweises auf die Patenterteilung: **17.07.2019**
(21) Anmeldenummer: 15707921.1
(22) Anmeldetag: 02.03.2015
(51) Int. Cl.: F16C 33/20, F16C 43/02, F16C 17/02, F16C 33/04

(54) **BUCHSE**
BUSHING
COUSSINET

(30) Priorität: 04.03.2014 DE 102014203913
(43) Veröffentlichungstag der Anmeldung: 11.01.2017
(73) Patentinhaber: Federal-Mogul Wiesbaden GmbH, 65201 Wiesbaden (DE)
(72) Erfinder: RITTMANN, Stefan, 67292 Kirchheimbolanden (DE); KIRCHHOF, Klaus, 65527 Niedernhausen (DE); MICHALSKI, Mateusz, 55262 Heidesheim (DE)
(74) Vertreter: Mehler Achler
(86) Internationale Anmeldenummer: PCT/EP2015/054273
(87) Internationale Veröffentlichungsnummer: WO 2015/132188

(56) Entgegenhaltungen:
- EP-A1- 0 218 274
- EP-A2- 0 451 884
- WO-A1-2007/087771
- US-A- 2 855 252

## Beschreibung

Die Erfindung betrifft eine Buchse, insbesondere eine Gleitlagerbuchse, mit zylindrischer Mantelfläche, welche aus einem Materialstreifen derart umgeformt ist, dass in Umfangsrichtung zwei Stoßenden benachbart angeordnet sind, wobei an einem ersten Stoßende ein Vorsprung und an einem zweiten Stoßende eine mit dem Vorsprung formschlüssig in Eingriff stehende Ausnehmung angeordnet ist.

Solche Buchsen sind seit langem bekannt und finden in den unterschiedlichsten technischen Bereichen Verwendung. Beispielhaft für den Stand der Technik werden die Dokumente EP 0451884 A2, DE3511125A1, DE3316767A1, US1298100, EP 1248005 B1 oder die WO 2007/087771 A1 genannt.

Buchsen werden standardmäßig durch Umformungsprozesse, insbesondere Rollumformen oder Biegeumformen, eines Materialstreifens hergestellt. Dabei weisen die beiden Stoßenden des Materialstreifens einander entsprechende Verklinkungselemente auf, welche während des Umformungsprozesses tangential aufeinander zu bewegt und letztendlich miteinander verklinkt werden. Die Stoßenden kennzeichnen die Seiten des Materialstreifens, zwischen denen sich nach dem Umformungsprozess eine Stoßfuge ausbildet. Typischerweise ist ein Verklinkungselement in Form eines Zapfens mit Hinterschneidungen ausgebildet und das andere Verklinkungselement in Form einer Ausnehmung, in die der Zapfen zur axialen und umfänglichen Fixierung eingreift. Diese Verklinkungselemente sind eingangs der Umformung nicht exakt komplementär. Vielmehr weist das Stoßende mit Ausnehmung zunächst einseitig oder beidseitig der Ausnehmung kleine Ausläufer auf, die beim Ineinanderschieben von Zapfen und Ausnehmung in die Hinterschneidungen des Zapfens geklappt werden, wodurch eine formschlüssige Fixierung der Stoßenden in Umfangsrichtung, ein so genannter "Clinch", entsteht. Bei dem Einklappen findet eine Materialumformung statt.

Desweiteren sind Verklinkungselemente bekannt, bei denen der Zapfen in Umfangsrichtung der Buchse eine größere Ausdehnung aufweist, als die komplementäre Ausnehmung, die wiederum in axialer Richtung der Buchse breiter ausgeformt ist, als der entsprechende Zapfen. Dies ist beispielsweise in der US 2283918 geschildert. Beim Ineinanderschieben von Zapfen und Ausnehmung wird der Zapfen zunächst gestaucht, sobald dieser an den der Öffnung der Ausnehmung gegenüberliegenden Randbereich der Ausnehmung trifft. Werden die Stoßenden weiter aufeinander zu bewegt, so weicht das gestauchte Material in axialer Richtung in die Zwischenräume zwischen Zapfen und Ausnehmung aus, wodurch ebenfalls Hinterschneidungen gebildet werden. Somit entsteht eine formschlüssige Verbindung der Stoßenden auch in Umfangsrichtung der Buchse.

In beiden geschilderten Fällen entsteht eine formschlüssige Verbindung, ein Clinch, in Folge von Materialumformungen. Diese Methoden der Buchsenherstellung im Zuge von Materialumformungen haben jedoch den Nachteil, dass die Genauigkeit des Formschlusses maßgeblich von dem Materialfluss während des Zusammenfügens abhängig ist. Es hat sich in der Praxis gezeigt, dass nicht in allen Fällen ein geeigneter Formschluss erzielt werden kann, was in bestimmten Fällen dazu führt, dass sich die Verklinkungselemente lockern und somit die gesamte Buchse in der Lagerbohrung nachgibt. Um diese Gefahr zu mindern, sind strengere Kontrollen der Verklinkungselemente nötig, was sowohl den Ausschuss als auch den Fertigungsaufwand der Buchse erhöht.

Auch aus anderen technischen Gebieten sind ähnliche Verklinkungselemente bekannt, die beim Zusammenfügen einem Materialumformungsprozess unterliegen. Es wird beispielsweise auf die Schriften US 7,025,393 B2 oder US 7,794,609 B2 verwiesen.

Um die geschilderten Probleme zu umgehen, werden für sehr präzise Anwendungen mit geringen Maßtoleranzen Buchsen mit glatten Stoßenden oder zumindest Stoßenden ohne Hinterschneidungen verwendet. Derartige Buchsen sind beispielsweise aus der EP 0 218 274, der DE 198 37 596 C1, der DE 28 18 378 A1 oder der US 4909638 bekannt. Bei diesen Buchsen sind die Verklinkungselemente exakt komplementär zueinander eingerichtet. Dies führt dazu, dass diese Verklinkungselemente auch ohne jegliche Materialumformung formschlüssig ineinander greifen. Jedoch hat diese Art der Verklinkung den Nachteil, dass durch die exakt komplementären Verklinkungselemente während der Umformung sehr enge Fertigungstoleranzen eingehalten werden müssen, um eine Beschädigung des Zapfens oder der Ausnehmung und einen daraus resultierenden Ausschuss der Buchse zu verhindern. Ein weiterer Nachteil entsteht dadurch, dass die formschlüssige Fixierung der Stoßenden lediglich in axialer Richtung der Buchse erfolgt und kein Clinch entsteht. In Umfangsrichtung der Buchse findet somit keine formschlüssige Fixierung statt. Die Buchse wird folglich nicht spaltfrei verschlossen werden können, was eine etwaige anschließende Bearbeitung und den Einbau in entsprechende Lager stark erschwert.

Aus der Schrift DE 40 19 055 C1 ist eine weitere Buchse mit Verklinkungselementen in Form miteinander verkeilbarer Vorsprünge und Rücksprünge bekannt, wobei der Keilwinkel der miteinander in Eingriff bringbaren Keilflächen größer ist als der Selbsthemmungswinkel. Die Keilwinkel sind demnach bewusst so gewählt, dass sichergestellt ist, dass die Buchse radial nach außen auffedern kann. Es handelt sich dementsprechend um eine Buchse, die ebenfalls nicht spaltfrei verschlossen werden kann.

Vor diesem Hintergrund ist es die Aufgabe der Erfindung eine Buchse bereitzustellen, die die Nachteile des Standes der Technik weitestgehend behebt.

Gelöst wird diese Aufgabe durch eine Buchse mit den Merkmalen gemäß Patentanspruch 1.

Erfindungsgemäß ist die Buchse der eingangs genannten Art dadurch gekennzeichnet, dass der Vorsprung und die Ausnehmung an den Stoßenden des Materialstreifens der Buchse in Umfangsrichtung ineinander einführbar und reibschlüssig miteinander verbunden sind.

Der Vorsprung und die Ausnehmung an den Stoßenden des Materialstreifens werden deshalb auch unter dem Begriff Klemmelemente zusammengefasst. Diese reibschlüssige Verbindung bietet den Vorteil, dass die umgeformte Buchse wesentlich widerstandsfähiger gegenüber äußeren Krafteinwirkungen und somit gegen Verformungen in Umfangsrichtung ausgeführt ist. Dies führt zu einer deutlichen Verlängerung der Lebensdauer der Buchse und zu einer Kosten- und Materialeinsparung. Desweiteren ist durch die reibschlüssige Verbindung ein spaltfreier Verschluss der Buchse in deren Umfangsrichtung möglich, wodurch ein Austreten von Schmierstoffen oder anderen Materialien in die Halterung der Buchse und somit eine Lockerung und ein damit bedingter Ausfall der Buchse vermieden wird. Einen weiteren Vorteil bietet die reibschlüssige Verbindung dahingehend, dass die Buchse bereits freistehend in ihrer Endform hergestellt werden kann. Dies erleichtert den Einbau in entsprechende Buchsenlager deutlich. Die Buchse muss vor dem Einbau nicht erst zusammengedrückt werden, sondern kann direkt in die Lagerbohrung eingeschoben werden. Dieser Sachverhalt führt zu einer Verringerung der Montagezeit und der Kosten.

Vorteilhaft ist eine Ausführungsform, bei der, in der Projektion auf die Mantelfläche betrachtet, der Vorsprung in Umfangsrichtung von seiner dem ersten Stoßende benachbarten Basisseite hin zu seinem freien Ende in der Gestalt verjüngt ist, dass er keine Hinterschneidung bildet. Die Ausnehmung ist vorzugsweise komplementär zu dem Vorsprung ausgebildet.

Die Basisseite des Vorsprungs wird nachfolgend auch "lange Grundseite" des Vorsprungs genannt, die gegenüberliegende "kurze Grundseite" des Vorsprungs bildet das freie Ende. Die Klemmelemente weisen in dieser Ausgestaltung weder Ausläufer noch Hohlräume auf, welche durch einen entsprechenden Materialfluss während der Umformung umgebogen oder gefüllt werden müssen. Somit ermöglicht die erfindungsgemäße Ausführungsform eine reibschlüssige Verbindung der Stoßenden eines Materialstreifens in Umfangsrichtung der Buchse ohne jegliche Materialumformung oder Materialfluss. Folglich können Buchsen mit wesentlich geringeren Maßtoleranzen hergestellt werden. Vorteilhaft ist ebenfalls, dass sich die Klemmelemente leichter ineinander einführen lassen und zudem eine leichtere Zentrierung des Vorsprungs innerhalb der Ausnehmung erfolgt.

Gemäß einer vorteilhaften Weiterbildung der erfindungsgemäßen Buchse weist der Vorsprung zwei in axialer Richtung der Buchse beabstandete Schenkelseiten auf, von denen eine erste Schenkelseite einen Winkel α₁ mit der Umfangsrichtung von 5° bis 30° und eine zweite Seitenfläche einen Winkel α₂ mit der Umfangsrichtung von 0° bis 60° einschließt. In einer besonders vorteilhaften Ausführung liegt die Summe der Winkel α₁ und α₂ in einem Bereich zwischen 10° und 60°. Selbiges gilt für die Winkel β₁ und β₂ zwischen den jeweils komplementären ersten bzw. zweiten Schenkelseiten der Ausnehmung und der Umfangsrichtung.

Erfindungsgemäß sind die Winkel α₁ und α₂ vorteilhafterweise gleich groß. Insbesondere ist in einem Winkelbereich von 5° bis 30° für die Winkel α₁, β₁ und α₂, β₂ die Reibung zwischen den Flächen der jeweils aneinander anliegenden Schenkelseiten des Vorsprunges und der Ausnehmung ausreichend für eine sichere Klemmung. Darüber hinaus ist die Kräfteverteilung aufgrund der Winkelsymmetrie gleich und die Zentrierung des Vorsprungs in der Ausnehmung während des Umformens besonders sicher.

Eine weitere vorteilhafte Weiterbildung der erfindungsgemäßen Buchse weist einen trapez- oder trapezoidförmigen Vorsprung auf. Diese Form hat die Vorteile, dass sich zum einen die Klemmelemente besonders leichtgängig reib- und formschlüssig ineinanderschieben lassen und zum anderen der Reibschluss optimiert wird.

Vorteilhafterweise weist der Vorsprung eine Höhe h₃ in Umfangsrichtung zwischen 2 und 8 mm auf, wobei die Höhe h₃ den größten Abstand von der Basisseite zu der gegenüberliegenden kurzen Grundseite des Vorsprungs beschreibt.

Vorteilhafterweise weist der Vorsprung eine Länge L₉ der langen Grundseite zwischen 2 und 6 mm auf.

Die erfindungsgemäße reibschlüssige Verbindung der Stoßenden ermöglicht vorteilhafter Weise auch Materialstreifen aus porösen Sinterwerkstoffen oder Streckmetallen, insbesondere mit imprägniertem Kunststoffgleitmaterial, zu Buchsen umzuformen und die Stoßenden derselben in Umfangsrichtung miteinander zu fixieren. Poröse und spröde Materialien, wie beispielsweise Streckmetall oder ein metallischer Sinterwerkstoff mit imprägnierter Kunststoff-Gleitschicht, eignen sich aufgrund geringerer Zugfestigkeit wenig, um die bekannten Verklinkungen an den Stoßenden durch plastische Verformung der Verklinkungselemente zu erzeugen. Generell kann eine Verklinkung mit Hinterschneidung aus diesen Materialien leichter beschädigt werden, was sogar zum Versagen der Buchse führen kann. Bei der erfindungsgemäßen Buchse erfolgt die Kraftübertragung zwischen den Klemmelementen wesentlich homogener und ohne oder nahezu ohne plastische Verformung des Materials, wodurch eine deutliche Steigerung der Lebensdauer der Buchse auch bei sensiblen Materialien mit wirksamer Fixierung der Enden möglich wird.

In einer weiter vorteilhaften Ausführungsform weist die erfindungsgemäße Gleitlagerbuchse wenigstens eine Anlaufscheibe an der axialen Stirnseite auf.

Werden Anlaufscheiben direkt an der Buchse durch Umformung des Materialstreifens angeformt, so neigt die Buchse aufgrund von Rückstellkräften verstärkt zum Öffnen. Deshalb treten gerade bei solchen Buchsen hohe Kräfte an den Klemmelementen und dem Materialstreifen auf, denen insbesondere Materialstreifen aus einem porösen Sinterwerkstoff oder einem Streckmetall mit imprägniertem Kunststoffgleitmaterial aufgrund ihrer geringen Zugfestigkeit regelmäßig nicht Stand halten. Die Zugbelastung führt zu einem Versagen formschlüssig ineinandergreifender Verklinkungselemente während des oder nach dem Umformungsprozess und somit tatsächlich zu einem Öffnen der Buchse. Die erfindungsgemäße Gleitlagerbuchse bewirkt infolge der reibschlüssigen Verbindung zwischen den Klemmelementen eine erhebliche Verbesserung. Die reibschlüssigen Klemmung zwischen dem Vorsprung und der Ausnehmung ist gerade bei besagten strukturschwächeren Materialien bei Zugbelastung in Umfangsrichtung wesentlich widerstandsfähiger als ein Formschluss.

In einer weiteren vorteilhaften Ausführungsform der Gleitlagerbuchse sind der Vorsprung und die Ausnehmung in der axialen Mitte der Buchse angeordnet.

Bei einer Gleitlagerbuchse ohne Anlaufscheibe befinden sich die Klemmelemente folglich in der Mitte des Materialstreifens, aus dem die Buchse umgeformt wird. Bei Buchsen mit einer einseitig angeformten Anlaufscheibe liegen die Klemmelemente außerhalb der Mitte des Materialstreifens. Und bei einer Buchse mit an beiden Stirnseiten angeformten Anlaufscheiben sind der Vorsprung und die Ausnehmung vorzugsweise wiederum in der axialen Mitte der umgeformten Buchse angeordnet.

Diese Ausführungsformen werden aus Gründen der Symmetrie bevorzugt.

Weitere Merkmale und Vorteile der Erfindung werden nachfolgend mit der Hilfe der Figuren näher erläutert. Es zeigen:
- Figur 1: eine schematische Darstellung einer umgeformten Gleitlagerbuchse mit einer trapezförmigen Keilklemmung,
- Figur 2: eine vergrößerte schematische Darstellung der trapezförmigen Klemmelemente,
- Figur 3: eine schematische Darstellung einer Gleitlagerbuchse mit trapezförmiger Keilklemmung und einer angeformten Anlaufscheibe,
- Figur 4: eine schematische Darstellung der Gleitlagerbuchse mit trapezförmiger Keilklemmung und einer ersten aus dem Materialstreifen umgeformten Anlaufscheibe vor dem Anformen einer zweiten Anlaufscheibe,
- Figur 5: eine schematische Darstellung der Gleitlagerbuchse gemäß Figur 4 nach dem Anformen einer zweiten Anlaufscheibe.

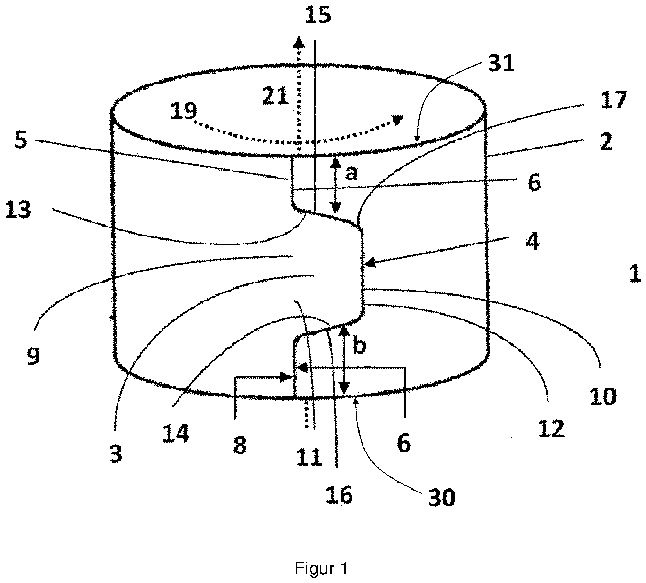

In Figur 1 ist ein Ausführungsbeispiel der erfindungsgemäßen Gleitlagerbuchse 1 dargestellt, welche durch Umformen, insbesondere durch Roll- oder Biegeumformen aus einem Materialstreifen 2 hergestellt ist. Die Buchse 1 weist trapezförmige Klemmelemente in Form eines Vorsprungs 3 an einem ersten Stoßende 6 des Materialstreifens 2 und einer mit dem Vorsprung 3 wechselwirkenden, komplementären Ausnehmung 4 an einem zweiten Stoßende 8 des Materialstreifens 2 auf. Der Vorsprung 3 und die Ausnehmung 4 sind derart geformt, dass sie ineinander einführbar und reibschlüssig miteinander verbindbar sind.

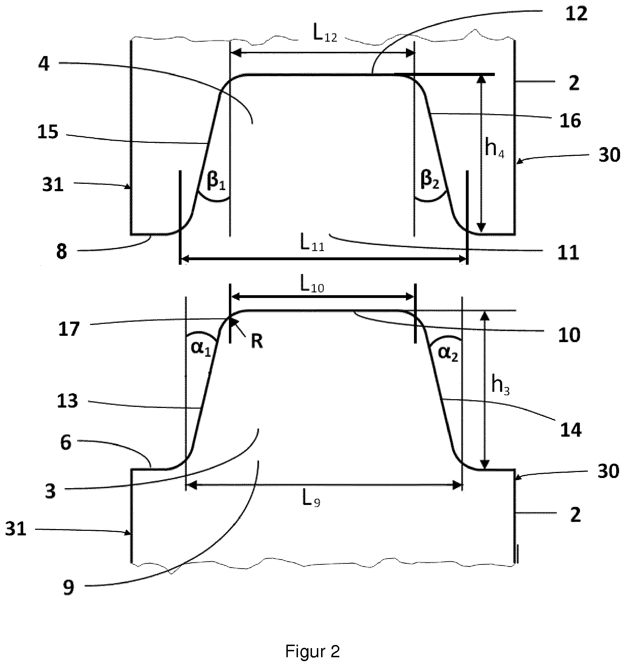

Figur 2 enthält zur Erläuterung der Geometrie der erfindungsgemäßen Klemmelemente eine vergrößerte Darstellung der Stoßenden 6 und 8 des Materialstreifens 2 gemäß Figur 1. Die Stoßenden sind zwecks Übersichtlichkeit voneinander beabstandet dargestellt. Der Vorsprung 3 weist zwei Grundseiten 9 und 10 auf. Die Grundseite 9, hierin auch als Basisseite bezeichnet, ist die längere der Grundseiten und grenzt an das erste Stoßende 6, genauer an die Stirnseite des ersten Stoßendes 6 des Materialstreifens 2 an. Die Basisseite 9 bildet also die gedachte Verbindungslinie zwischen den Flanken des Stoßendes 6 seitlich des Vorsprungs 3. Die kürzere Grundseite 10 ist parallel zur Basisseite 9 an dem freien Ende des Vorsprunges angeordnet. L₉ und L₁₀ kennzeichnen die Längen der Grundseiten 9 und 10 des Vorsprungs 3.

Die Ausnehmung 4 weist zu dem Vorsprung komplementär eine längerer Basis- oder Grundseite 11 und eine kürzere, der Basisseite 11 gegenüberliegende Grundseite 12 auf. Die Basisseite 11 liegt in der Ebene des zweiten Stoßendes 8, genauer der Stirnseite des zweiten Stoßendes 8 des Materialstreifens 2. Die Grundseite 12 ist parallel zur Basisseite 11 in Umfangsrichtung 19 in den Materialstreifen 2 hinein versetzt angeordnet. L₁₁ und L₁₂ kennzeichnen die Längen der Grundseiten 11 und 12 der Ausnehmung 4.

Der Vorsprung 3 weist ferner zwei in axialer Richtung 21 der Buchse 1 beabstandete Schenkelseiten 13, 14 und die Ausnehmung zwei korrespondierende Schenkelseiten 15 und 16 auf.

Sind die Ecken 17 des Vorsprunges 3 oder der Ausnehmung 4 abgerundet, was in Figur 2 durch den Krümmungsradius R angezeigt wird, so sind die Längen L₉, L₁₀, L₁₁ und L₁₂ durch die Schnittpunkte der verlängerten Schenkelseiten 13, 14, 15 und 16 mit den verlängerten Grundseiten 9, 10, 11 und 12 bestimmt.

In der Projektion auf die Mantelfläche der Buchse 1 betrachtet, verjüngen sich somit beide Klemmelemente 3 und 4 in Umfangsrichtung 19 von dem ersten zum zweiten Stoßende hin (Figur 1). Der Vorsprung 3 verjüngt sich von seiner Basisseite 9 hin zu seiner kürzeren Grundseiten 10. Folglich bildet der Vorsprung 3 keine Hinterschneidungen aus. In der gleichen Richtung verjüngt sich die Ausnehmung 4 von ihrer längeren Basisseite 11 hin zu ihrer kürzeren Grundseiten 12 im Inneren des Materialstreifens 2. Es gilt demnach L₉ > L₁₀ und L₁₁ > L₁₂.

Der Vorsprung 3 weist eine Höhe h₃ auf, die durch den größten Abstand zwischen der Basisseite 9 und der gegenüberliegenden kürzeren Grundseite 10 definiert ist. Sie beträgt vorzugsweise zwischen 2 und 8 mm. Die Länge L₉ der Basisseite 9 beträgt vorzugsweise zwischen 2 und 6 mm. Entsprechend weist die Ausnehmung 4 eine Höhe h₄ bevorzugt gleicher Gestalt und im Wesentlichen gleicher Dimension auf.

Die Schenkelseiten 13, 14 schließen mit der Umfangsrichtung 19 der Buchse 1 die Winkel α₁ und α₂ ein. Komplementär hierzu schließen die in axialer Richtung 21 der Buchse 1 beabstandeten Schenkelseiten 15 und 16 der Ausnehmung 4 mit der Umfangsrichtung 19 der Buchse 1 die Winkel β₁ und β₂ ein. Die Schenkelseite 13 des Vorsprungs 3 und die Schenkelseite 15 der Ausnehmung 4, sowie die Schenkelseite 14 des Vorsprungs 3 und die Schenkelseite 16 der Ausnehmung 4 liegen nach der Umformung des Materialstreifens 2 und dem Einführen des Vorsprunges 3 in die Ausnehmung 4 jeweils aneinander an. Die Winkel α₁ und β₁ bzw. α₂ und β₂ sind jeweils im Wesentlichen komplementär.

Insbesondere beträgt der Winkel α₁ zwischen 5 und 30° und der Winkel α₂ zwischen 0 und 60°.

Die zwischen den Schenkelseiten 13, 14 und der kurzen Grundseite 10 befindlichen Ecken 17 des Vorsprungs 3 können spitz zulaufen oder aber, wie bereits erwähnt, mit einem Krümmungsradius R versehen sein. Das Verhältnis R / h₃ des Radius R zur Höhe h₃ des Vorsprunges 3 liegt vorzugsweise im Bereich zwischen 0 bis 0,5.

Die Ausnehmung 4 ist so eingerichtet, dass infolge der Umformung der Vorsprung 3 und die Ausnehmung 4 formschlüssig in axialer Richtung 21 der Buchse 1 und reibschlüssig in Umfangsrichtung 19 der Buchse 1 ineinandergreifen.

In einer Ausführungsform der erfindungsgemäßen Buchse 1 sind die Klemmelemente 3, 4 exakt komplementär zueinander. Die entsprechenden Schenkelseitenpaare 13, 15 und 14, 16, die Grundflächenpaare 9, 11 und 10, 12 sowie die Winkelpaare α₁, β₁ und α₂, β₂ des Vorsprungs 3 und der Ausnehmung 4 sind in ihrer Lage und ihrem Betrag nach identisch.

In einer weiteren Ausführungsform der in Figur 1 gezeigten Gleitlagerbuchse 1 sind der Vorsprung 3 und die Ausnehmung 4 nicht exakt komplementär zueinander. Das heißt, wenigstens eines der Schenkelseitenpaare 13, 15 und/oder 14, 16 und/oder der Grundseitenpaare 9, 11 und/oder 10, 12 und/oder der Wi n-kelpaare α₁, β₁ und/oder α₂, β₂ weichen in der Gestalt voneinander ab, dass eine verstärkte Klemmwirkung sichergestellt ist.

Vorzugsweise gilt für wenigstens eines der Winkelpaare α₁ < β₁ oder α₂ < β₂ und das Grundseitenpaar 10, 12 L₁₀ > L₁₂. Wahlweise gilt für wenigstens eines der Winkelpaare α₁ > β₁ oder α₂ > β₂ und das Grundseitenpaar 9, 11 L₉ > L₁₁. Alternativ können bei identischen Winkeln α₁ = β₁ und α₂ = β₂ beide Grundseiten 9, 10 des Vorsprunges 3 länger gewählt werden als die korrespondierenden Grundseiten 11, 12 der Ausnehmung 4: L₉ > L₁₁ und L₁₀ > L₁₂. Die Unterschiede sind freilich nur gering und betragen bevorzugt nur wenige Prozent der jeweiligen Abmessungen. In diesem Sinne werden hierin die exakt komplementären und die nicht exakt komplementären Klemmelemente als (im Wesentlichen) "komplementär" bezeichnet.

Der für die Umformung zur Buchse 1 verwendete Materialstreifen 2 kann in bekannter Weise einschichtig aufgebaut sein oder aus einem Schichtverbund mit unterschiedlichen Funktionsschichten bestehen. Insbesondere kann dieser eine tragende Streckmetallschicht oder einen Stahlrücken und eine poröse Sintermetallschicht, jeweils in Verbindung mit einer imprägnierten Kunststoffgleitschicht, beispielsweise auf PTFE-Basis, aufweisen.

Bei der in den Figuren 1 und 2 abgebildeten erfindungsgemäßen Gleitlagerbuchse 1 handelt es sich um eine Ausführungsform, bei der die Klemmelemente 3 und 4 in der axialen Mitte des Materialstreifens 2 angeordnet sind. Folglich sind die mittleren Abstände a und b zwischen den Schenkelseiten 13 bzw. 14 einerseits und 15 bzw. 16 andererseits zu der jeweils benachbarten Stirnseite 30 bzw. 31 der Gleitlagerbuchse 1 gleich groß. Weist die Gleitlagerbuchse 1 keine Anlaufscheibe auf, so befinden sich die Klemmelemente 3 und 4 dann auch in der axialen Mitte der Buchse 1.

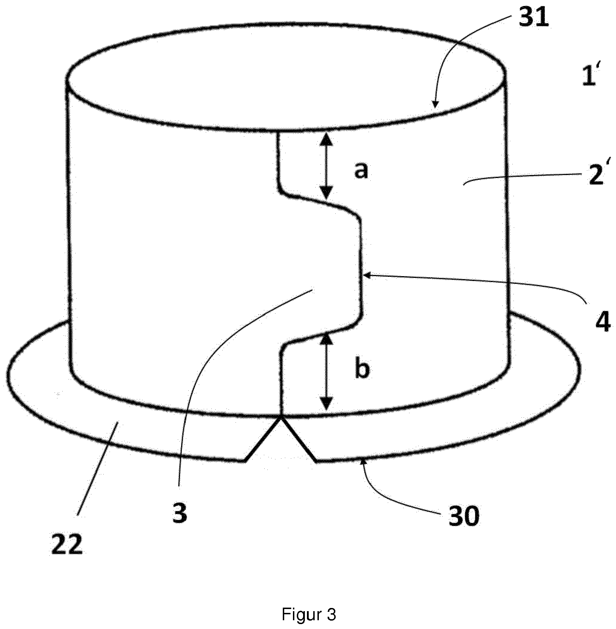

In der Figur 3 ist eine schematische Darstellung der erfindungsgemäßen Gleitlagerbuchse 1' mit Anlaufscheibe 22 dargestellt. Diese Anlaufscheibe 22 ist vorzugsweise durch Umformen eines einstückigen Materialstreifens 2' hergestellt. Er definiert die Stirnseite 30 der Buchse 1. Die Klemmelemente 3 und 4 sind wiederum in der axialen Mitte der Buchse 1 angeordnet, die Abstände a und b also gleich groß. Aufgrund des für die Anlaufscheibe 22 benötigten Materials des Materialstreifens 2 sind die Klemmelemente 3 und 4 jedoch nicht in der Mitte des ursprünglichen Materialstreifens 2 angeordnet.

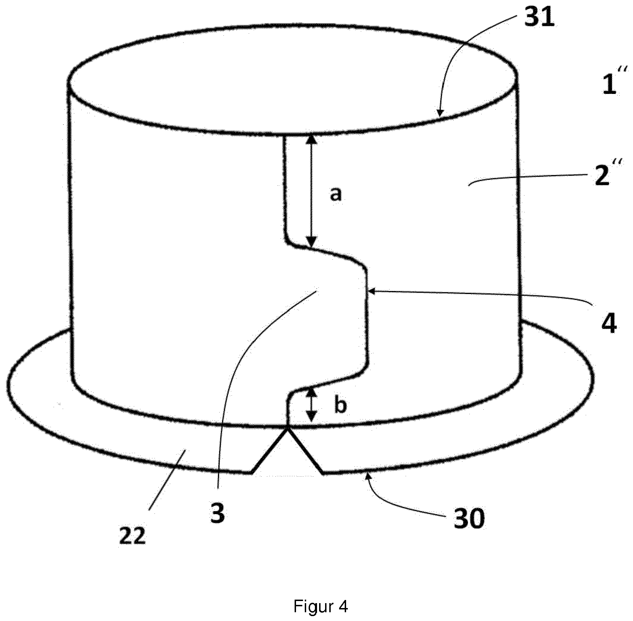

Figur 4 zeigt eine weitere Gleitlagerbuchse 1" mit einer einseitig angeformten Anlaufscheibe 22. Dies stellt einen Zwischenzustand der Buchse 1" dar, die nach erfolgtem Einbau in einen Lagersitz auch auf der gegenüberliegenden, offenen Stirnseite 31 durch Umformung mit einer Anlaufscheibe versehen werden soll. Im Unterschied zu der Ausführungsform in Figur 3 befinden sich die Klemmelemente 3 und 4 deshalb in diesem Zustand nicht in der axialen Mitte der Buchse 1", sondern aus Symmetriegründen in der Mitte des Materialstreifens 2". Der Abstand der Klemmelemente zu der offenen Stirnseite 31 ist größer als der Abstand zu der Stirnseite 30 mit der Anlaufscheibe 22.

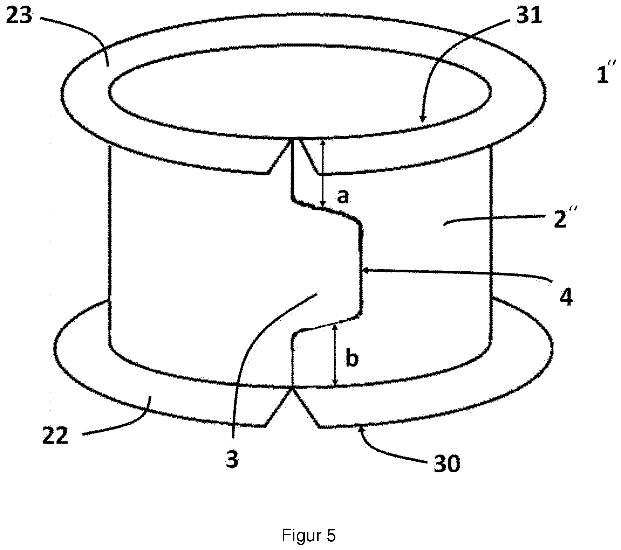

In der Figur 5 ist die in der Figur 4 dargestellte Buchse 1" nach Anformen einer zweiten Anlaufscheibe 23 abgebildet. Die Buchse ist also in ihrer Einbauform (ohne Darstellung des Lagersitzes) gezeigt. Hiernach sind die Klemmelemente 3 und 4 wieder in der axialen Mitte der fertigen Buchse 1" angeordnet.

Selbstverständlich können im Sinne der Erfindung anstelle jeweils eines Klemmelements an jeder Stoßkante auch jeweils mehrere Klemmelemente vorgesehen sein. Diese Klemmelemente können gleichsinnig oder auch wechselseitig angeordnet sein, d.h. mehrere Vorsprünge und die komplementären Ausnehmungen können an demselben oder an den gegenüberliegenden Stoßenden angeordnet sein.

### Bezugszeichenliste

- 1, 1', 1": Buchse
- 2, 2', 2": Materialstreifen
- 3: Vorsprung
- 4: Ausnehmung
- 6: erstes Stoßende
- 8: zweite Stoßende
- 9: erste Grundseite/ Basisseite des Vorsprungs
- 10: zweite Grundseite des Vorsprungs
- 11: erste Grundseite/ Basisseite der Ausnehmung
- 12: zweite Grundseite der Ausnehmung
- 13: erste Schenkelseite des Vorsprungs
- 14: zweite Schenkelseite des Vorsprungs
- 15: erste Schenkelseite der Ausnehmung
- 16: zweite Schenkelseite der Ausnehmung
- 17: Ecke
- 19: Umfangsrichtung der Buchse
- 21: axiale Richtung der Buchse
- 22: Anlaufscheibe
- 23: Anlaufscheibe
- 30: Stirnseite der Buchse
- 31: Stirnseite der Buchse

- a: Abstand Zwischen Schenkelseite des Vorsprungs oder der Ausnehmung und Stirnseite der Buchse
- b: Abstand Zwischen Schenkelseite des Vorsprungs oder der Ausnehmung und Stirnseite der Buchse
- R: Radius der Ecken
- h₃: Höhe des Vorsprungs
- h₄: Tiefe der Ausnehmung
- L₉: Länge der ersten Grundseite des Vorsprungs
- L₁₀: Länge der zweiten Grundseite des Vorsprungs
- L₁₁: Länge der ersten Grundseite der Ausnehmung
- L₁₂: Länge der zweiten Grundseite der Ausnehmung

- α₁, α₂: Winkel zwischen Schenkelseiten des Vorsprungs und Umfangsrichtung der Buchse
- β₁, β₂: Winkel zwischen Schenkelseiten der Ausnehmung und Umfangsrichtung der Buchse

## Patentansprüche

1. Gleitlagerbuchse (1) mit zylindrischer Mantelfläche, welche aus einem Materialstreifen (2) derart umgeformt ist, dass in Umfangsrichtung zwei Stoßenden (6, 8) benachbart angeordnet sind, wobei an einem ersten Stoßende (6) ein Vorsprung (3) und an einem zweiten Stoßende (8) eine mit dem Vorsprung (3) formschlüssig in Eingriff stehende Ausnehmung (4) angeordnet sind, **dadurch gekennzeichnet,**
**dass** der Vorsprung (3) und die Ausnehmung (4) in Umfangsrichtung ineinander einführbar und reibschlüssig miteinander verbunden sind.

2. Gleitlagerbuchse (1) nach Anspruch 1, **dadurch gekennzeichnet,**
**dass**, in der Projektion auf die Mantelfläche betrachtet, der Vorsprung (3) in Umfangsrichtung von seiner dem ersten Stoßende (6) benachbarten Basisseite (9) hin zu seinem freien Ende ohne Ausbildung einer Hinterschneidung verjüngt ist und dass die Ausnehmung (4) komplementär ausgebildet ist.

3. Gleitlagerbuchse (1) nach Anspruch 2, **dadurch gekennzeichnet,**
**dass** der Vorsprung (3) zwei in axialer Richtung beabstandete Schenkelseiten (13, 14) aufweist, von denen eine erste Schenkelseite (13), in der Projektion auf die Mantelfläche betrachtet, einen Winkel α₁ mit der Umfangsrichtung von 5° bis 30° und eine zweite Schenkelseite (14) einen Winkel α₂ mit der Umfangsrichtung von 0° bis 60° einschließt.

4. Gleitlagerbuchse (1) nach Anspruch 3, **dadurch gekennzeichnet,**
**dass** die Summe der Winkel α₁ und α₂ von 10° bis 60° beträgt.

5. Gleitlagerbuchse (1) nach einem der vorstehenden Ansprüche, **dadurch gekennzeichnet,**
**dass** die Winkel α₁ und α₂ dem Betrag nach gleich groß sind.

6. Gleitlagerbuchse (1) nach einem der vorstehenden Ansprüche, **dadurch gekennzeichnet,**
**dass** der Vorsprung (3) trapezförmig oder trapezoidförmig ist.

7. Gleitlagerbuchse (1) nach einem der vorstehenden Ansprüche, **dadurch gekennzeichnet,**
**dass** eine Höhe h₃ des Vorsprungs (3) in Umfangsrichtung zwischen 2 und 8 mm beträgt.

8. Gleitlagerbuchse (1) nach einem der vorstehenden Ansprüche, **dadurch gekennzeichnet,**
**dass** eine Länge L₉ der Basisseite des Vorsprungs (3) zwischen 2 und 6 mm beträgt.

9. Gleitlagerbuchse (1) nach einem der vorstehenden Ansprüche, **dadurch gekennzeichnet,**
**dass** wenigstens an einer axialen Stirnseite (30, 31) der Buchse (1) eine Anlaufscheibe (22) angeordnet ist.

10. Gleitlagerbuchse (1) nach einem der vorstehenden Ansprüche, **dadurch gekennzeichnet,**
**dass** der Vorsprung (3) in der axialen Mitte der Buchse (1) angeordnet ist.

## Claims

1. Plain bearing bushing (1) having a cylindrical covering face which is formed from a material strip (2) in such a manner that in the peripheral direction two abutment ends (6, 8) are arranged adjacent to each other, wherein at a first abutment end (6) a projection (3) and at a second abutment end (8) a recess (4) which is in positive-locking engagement with the projection (3) are arranged, **characterised in that** the projection (3) and the recess (4) can be introduced one into the other in a peripheral direction and are connected to each other in a frictionally engaging manner.

2. Plain bearing bushing (1) according to claim 1, **characterised in that**, when viewed in the projection onto the covering face, the projection (3) tapers in the peripheral direction from the base side (9) thereof adjacent to the first abutment end (6) to the free end thereof without forming an undercut and **in that** the recess (4) is constructed in a complementary manner.

3. Plain bearing bushing (1) according to claim 2, **characterised in that** the projection (3) has two member sides (13, 14) which are spaced apart in an axial direction and of which a first member side (13), when viewed in the projection onto the covering face, defines an angle α₁ with the peripheral direction of from 5° to 30° and a second member side (14) defines an angle α₂ with the peripheral direction of from 0° to 60°.

4. Plain bearing bushing (1) according to claim 3, **characterised in that** the sum of the angles α₁ and α₂ is from 10° to 60°.

5. Plain bearing bushing (1) according to any one of the preceding claims, **characterised in that** the angles α₁ and α₂ are equal in terms of amount.

6. Plain bearing bushing (1) according to any one of the preceding claims, **characterised in that** the projection (3) is trapezium-shaped or trapezoidal.

7. Plain bearing bushing (1) according to any one of the preceding claims, **characterised in that** a height h₃ of the projection (3) in the peripheral direction is between 2 and 8 mm.

8. Plain bearing bushing (1) according to any one of the preceding claims, **characterised in that** a length L₉ of the base side of the projection (3) is between 2 and 6 mm.

9. Plain bearing bushing (1) according to any one of the preceding claims, **characterised in that** a thrust washer (22) is arranged at least at an axial end side (30, 31) of the bushing (1).

10. Plain bearing bushing (1) according to any one of the preceding claims, **characterised in that** the projection (3) is arranged at the axial centre of the bushing (1).

## Revendications

1. Douille de palier lisse (1) munie d'une surface d'enveloppe cylindrique et mise en forme, à partir d'une bande de matériau (2), de façon telle que deux extrémités d'aboutement (6, 8) occupent des emplacements voisins dans le sens périphérique, une saillie (3), et un évidement (4) en prise avec ladite saillie (3) par complémentarité de formes, étant situés aux niveaux respectifs d'une première extrémité d'aboutement (6) et d'une seconde extrémité d'aboutement (8), **caractérisée par le fait que** la saillie (3) et l'évidement (4) peuvent être mis en interpénétration dans le sens périphérique, et sont reliés l'un à l'autre par frottement.

2. Douille de palier lisse (1) selon la revendication 1, **caractérisée par le fait que**, dans une vue en projection sur la surface de l'enveloppe, la saillie (3) s'amenuise dans le sens périphérique en direction de son extrémité libre, à partir de son côté de base (9) voisin de la première extrémité d'aboutement (6), sans formation de contre-dépouille ; et **par le fait que** l'évidement (4) est de réalisation complémentaire.

3. Douille de palier lisse (1) selon la revendication 2, **caractérisée par le fait que** la saillie (3) comporte deux côtés (13, 14) formant branches, espacés dans le sens axial et au sein desquels, dans une vue en projection sur la surface de l'enveloppe, un premier côté (13) formant branche décrit un angle α₁ de 5° à 30° avec le sens périphérique, et un second côté (14) formant branche décrit un angle α₂ de 0° à 60° avec ledit sens périphérique.

4. Douille de palier lisse (1) selon la revendication 3, **caractérisée par le fait que** la somme des angles α₁ et α₂ est comprise entre 10° et 60°.

5. Douille de palier lisse (1) selon l'une des revendications précédentes, **caractérisée par le fait**
**que** les angles α₁ et α₂ sont de valeurs identiques.

6. Douille de palier lisse (1) selon l'une des revendications précédentes, **caractérisée par le fait**
**que** la saillie (3) revêt la forme d'un trapèze ou d'un profil trapézoïdal.

7. Douille de palier lisse (1) selon l'une des revendications précédentes, **caractérisée par le fait**
**qu'**une hauteur h₃ de la saillie (3) mesure entre 2 et 8 mm dans le sens périphérique.

8. Douille de palier lisse (1) selon l'une des revendications précédentes, **caractérisée par le fait**
**qu'**une longueur L₉ du côté de base de la saillie (3) mesure entre 2 et 6 mm.

9. Douille de palier lisse (1) selon l'une des revendications précédentes, **caractérisée par le fait**
**qu'**un disque de butée (22) est situé au niveau d'au moins un côté d'extrémité axiale (30, 31) de ladite douille (1).

10. Douille de palier lisse (1) selon l'une des revendications précédentes, **caractérisée par le fait**
**que** la saillie (3) se trouve axialement au centre de ladite douille (1).
